# EUROPÄISCHE PATENTSCHRIFT

(11) **EP 1 324 117 B1**
(45) Veröffentlichungstag und Bekanntmachung des Hinweises auf die Patenterteilung: **20.12.2006**
(21) Anmeldenummer: 01130500.0
(22) Anmeldetag: 20.12.2001
(51) Int. Cl.: G03B 42/04

(54) **Röntgenkassette für eine Speicherleuchtstofffolie**
X-Ray cassette for a stimulable phosphor sheet
Cassette radiographique pour feuille luminescente stimulable

(43) Veröffentlichungstag der Anmeldung: 02.07.2003
(73) Patentinhaber: Agfa-Gevaert HealthCare GmbH, 51373 Leverkusen (DE)
(72) Erfinder: Stahl, Werner, 85551 Heimstetten (DE); Klabunde, Olaf, 85635 Höhenkirchen-Siegertsbrunn (DE)

(56) Entgegenhaltungen:
- GB-A- 1 361 014
- US-A- 5 441 251
- PATENT ABSTRACTS OF JAPAN vol. 2000, no. 03, 30. März 2000 (2000-03-30) -& JP 11 334896 A (FUJI PHOTO FILM CO LTD), 7. Dezember 1999 (1999-12-07)

## Beschreibung

Die vorliegende Erfindung betrifft eine Kassette zur Aufnahme einer Speicherleuchtstoffplatte gemäß dem Oberbegriff des Anspruchs 1 und ein Verfahren zum Öffnen und Schließen einer Öffnung der Kassette gemäß dem Oberbegriff des Anspruchs 9.

Insbesondere für medizinische Zwecke wird von einem Objekt, beispielsweise einem Patienten, mittels einer Röntgenstrahlung ein Bild erzeugt, das in einer Speicherleuchtstoffplatte als latentes Bild abgespeichert wird. Zum Auslesen des in einer Speicherleuchtstoffschicht der Speicherleuchtstoffplatte abgespeicherten Röntgenstrahlungsbildes wird die Speicherleuchtstoffschicht mittels einer Strahlungsquelle angeregt. Die Speicherleuchtstoffschicht emittiert daraufhin aufgrund dieser Anregung Licht, das eine Intensität aufweist, die proportional ist zur Menge von in der Speicherleuchtstoffschicht abgespeicherter Röntgenstrahlung. Das von der Speicherleuchtstoffschicht ausgesandte Licht wird von einem Detektionsmittel empfangen und anschließend in elektrische Signale gewandelt, so dass das in der Speicherleuchtstoffschicht abgespeicherte Röntgenstrahlungsbild anschließend sichtbar gemacht werden kann. Das Röntgenstrahlungsbild kann beispielsweise direkt auf einem Monitor dargestellt oder auch auf einen fotografischen Röntgenfilm geschrieben werden.

Aus der Patentschrift US 5,441,251 ist eine Vorrichtung zum Auslesen von in einer Speicherleuchtstoffplatte abgespeicherten Bildinformationen bekannt. Diese bekannte Vorrichtung enthält eine Strahlungsquelle und ein Detektionsmittel, mit denen ein abgespeichertes Röntgenstrahlungsbild ausgelesen wird. Die Speicherleuchtstoffplatte befindet sich in einer Kassette. Diese Kassette wird in die bekannte Vorrichtung eingeschoben, um anschließend die in der Kassette befindliche Speicherleuchtstoffplatte aus der Kassette heraus- und in die Vorrichtung hineinzuziehen. Um ein unbeabsichtigtes Herausfallen der Speicherleuchtstoffplatte aus der Kassette zu verhindern, ist die Speicherleuchtstoffplatte mittels verschiedener Ausführungen von Klemmen in der Kassette festgeklemmt. Elastische Füllungen in der Kassette verhindern des Weiteren ein Rutschen der Speicherleuchtstoffplatte in der Kassette. Sowohl die Klemmen als auch die elastischen Füllungen greifen direkt an der Speicherleuchtstoffschicht der Speicherleuchtstoffplatte an. Die Möglichkeit einer Beschädigung der Speicherleuchtstoffschicht ist somit wahrscheinlich.

Aus der vorveröffentlichten Patentanmeldung DE 3208999 A1 ist eine Kassette zur Aufnahme einer Speicherleuchtstoffplatte bekannt. Diese Kassette hat eine Öffnung zur Auf- und Entnahme der Speicherleuchtstoffplatte. Mittels einer Verschlussklappe kann die Öffnung geschlossen und geöffnet werden. Wird durch die Verschlussklappe die Öffnung verschlossen, so wird die Verschlussklappe in der Schließstellung durch Rastmittel arretiert. Zum Öffnen der bekannten Kassette in einer Entwicklungsvorrichtung kann das Rastmittel über einen Stift der Entwicklungsvorrichtung entriegelt werden. Die Verschlussklappe lässt sich dann öffnen, um die Speicherleuchtstoffplatte aus der Kassette herauszuziehen. In den Seitenwänden der Kassette ist innen je eine Führungsnut für die Speicherleuchtstoffplatte angebracht, in der die Speicherleuchtstoffplatte in der Kassette gelagert ist. Eine weitere Fixierung der Speicherleuchtstoffplatte in der Kassette ist nicht vorgesehen.

Der vorliegenden Erfindung liegt die Aufgabe zu Grunde, beim Auslesen von Bildinformationen, die in einer in einer Kassette aufgenommenen Speicherleuchtstoffplatte abgespeichert sind, einen sicheren Bewegungsablauf zu gewährleisten.

Diese Aufgabe wird durch die Merkmale des Anspruchs 1 oder des Anspruchs 9 gelöst.

Gemäß der vorliegenden Erfindung enthält die Kassette ein Steuermittel, mit dem wenigsten drei Steuerstufen einstellbar sind. In diesen drei Steuerstufen kann das Öffnen und Verschließen des Verschlusses der Kassette unabhängig von dem Fixieren der Speicherleuchtstoffplatte in der Kassette erfolgen. Dadurch kann gewährleistet werden, dass das Steuermittel eine Steuerstufe bereitstellt, in der der Verschluss bereits geöffnet, die Speicherleuchtstoffplatte allerdings weiterhin in der Kassette fixiert ist. Das Lösen der Fixierung der Speicherleuchtstoffplatte in der Kassette kann vollkommen unabhängig von dem Öffnen des Verschlusses erfolgen. Dadurch kann ein geeigneter Zeitpunkt zum Lösen der Fixierung der Speicherleuchtstoffplatte abgewartet werden.

Vorteilhafterweise ist das Steuermittel so ausgestaltet, dass die wenigstens drei Steuerstufen nacheinander in aufsteigender und absteigender Reihenfolge eingestellt werden können. Dies bedeutet, bei eingestellter erster Steuerstufe wird zunächst die zweite Steuerstufe und anschließend die dritte Steuerstufe eingestellt. Bei eingestellter dritter Steuerstufe kann dann zunächst die zweite daraufhin erneut die erste Steuerstufe eingestellt werden.

In einer vorteilhaften Ausgestaltung der Erfindung weist die Kassette ein Betätigungsmittel auf, mit dem sich das Steuermittel betätigen lässt. Dieses Betätigungsmittel ist vorteilhafterweise im Bereich einer Seitenfläche der Kassette angeordnet. Dadurch lässt sich das Steuermittel manuell oder auch durch eine Vorrichtung zum Auslesen der Speicherleuchtstoffplatte auf einfache Weise betätigen, ohne ein Transportieren der Speicherleuchtstoffplatte durch die Öffnung der Kassette zu behindern. Über das Betätigungsmittel kann das Steuermittel vorteilhafterweise sowohl in aufsteigender als auch in absteigender Reihenfolge eingestellt werden. Die vollständigen Funktionsabläufe zum Einstellen der verschiedenen Steuerstufen können somit über ein Betätigungsmittel gesteuert werden.

In einer weiteren vorteilhaften Ausgestaltung der Erfindung enthält die Kassette zwei Betätigungsmittel zum Betätigen des Steuermittels. Diese beiden Betätigungsmittel können insbesondere an zwei sich gegenüberliegenden Seitenflächen der Kassette angeordnet sein. Über das erste Betätigungsmittel kann das Steuermittel in aufsteigender Reihenfolge eingestellt werden und über das zweite Betätigungsmittel in absteigender Reihenfolge. Mittels des ersten Betätigungsmittels wird daher der Verschluss geöffnet und das Fixiermittel so eingestellt, dass das Fixieren der Speicherleuchtstoffplatte in der Kassette aufgehoben ist. Mittels des zweiten Betätigungsmittels wird der geöffnete Verschluss geschlossen und das Fixiermittel so eingestellt, dass es die nicht in der Kassette fixierte Speicherleuchtstoffplatte fixiert. Dadurch können auf einfache Weise die beiden Funktionsweisen des Steuermittels, nämlich das aufeinanderfolgende Öffnen des Verschlusses und Aufheben der Fixierung der Speicherleuchtstoffplatte in der Kassette, d. h. das Einstellen des Steuermittels in aufsteigender Reihenfolge, und das erneute Fixieren der nicht in der Kassette fixierten Speicherleuchtstoffplatte und das anschließende Verschließen der Öffnung der Kassette, d. h. das Einstellen des Steuermittels in absteigender Reihenfolge, realisiert werden.

In einer besonders vorteilhaften Ausgestaltung der Erfindung, wird das Steuermittel als Steuerschieber ausgestaltet. Über diesen Steuerschieber können drei Steuerstufen auf einfache Weise durch bloßes Verschieben des Steuerschiebers eingestellt werden.

Im Folgenden werden die Erfindung und ihre Vorteile an Hand von Ausführungsbeispielen beschrieben.

Es zeigen:
- Fig. 1: eine Schnittdarstellung eines Ausführungsbeispiels einer erfindungsgemäßen Röntgenkassette,
- Fig. 2: ein Beispiel zweier an einer Speicherleuchtstoffplatte angebrachter Konturen,
- Fig. 3 A-D: unterschiedliche Ansichten eines Ausführungsbeispiels eines Steuerschiebers mit eingestellter erster Steuerstufe,
- Fig. 4A-D: unterschiedliche Ansichten des Ausführungsbeispiels des Steuerschiebers mit eingestellter zweiter Steuerstufe und
- Fig. 5A-D: unterschiedliche Ansichten des Ausführungsbeispiels des Steuerschiebers mit eingestellter dritter Steuerstufe.

Im Folgenden werden für gleiche und gleich wirkende Elemente durchweg gleiche Bezugszeichen verwendet.

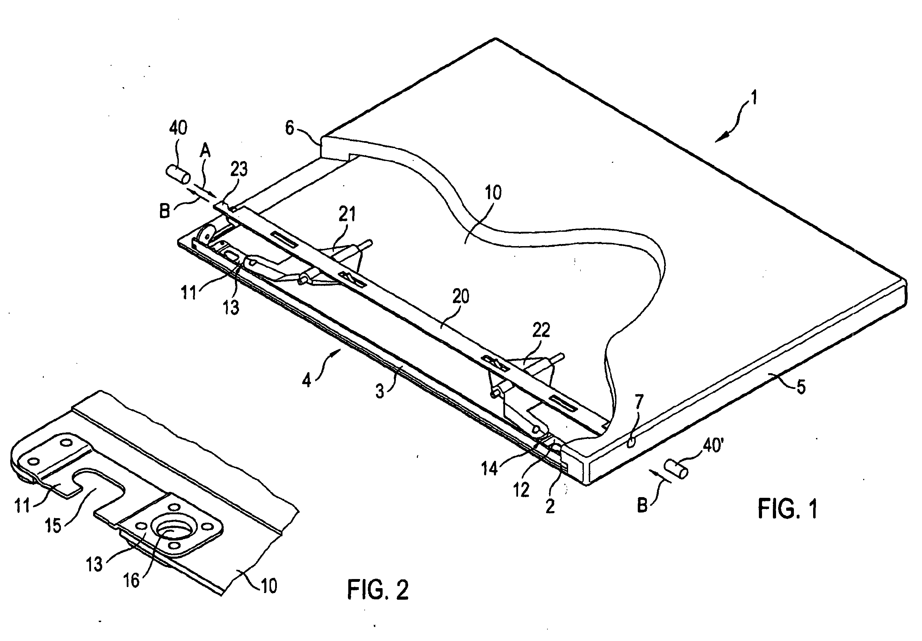

Fig. 1 zeigt die Schnittdarstellung einer erfindungsgemäßen Röntgenkassette 1. Die Röntgenkassette 1 hat ein Gehäuse mit einer Stirnseite 4 und zwei senkrecht zu dieser Stirnseite 4 liegenden kürzeren Seitenflächen 5 und 6. Innerhalb der Röntgenkassette 1 befindet sich eine Speicherleuchtstoffplatte 10. Diese Speicherleuchtstoffplatte 10 dient zum Abspeichern von Röntgeninformationen. Die Röntgeninformationen wurden mittels Röntgenstrahlung in der Speicherleuchtstoffplatte abgespeichert. Die Stirnseite 4 der Röntgenkassette 1 enthält eine schlitzförmige Öffnung 2. Über diese schlitzförmige Öffnung 2, die sich annähernd über die gesamte Breite der Stirnseite 4 erstreckt, kann die Speicherleuchtstoffplatte aus der Röntgenkassette 1 herausgezogen werden. Zum Verschließen der Öffnung 2 weist die Röntgenkassette 1 einen Verschluss 3 auf. Dieser Verschluss 3 kann über einen Bewegungsmechanismus in vertikaler Richtung innerhalb der Röntgenkassette 1 verschoben werden. Dadurch lässt sich die Öffnung 2 mittels des Verschlusses 3 öffnen und schließen.

Zum Herausziehen der Speicherleuchtstoffplatte 10 aus der Röntgenkassette 1 sind an der Speicherleuchtstoffplatte 10 zwei Konturen 11 und 12 angebracht. Die erste Kontur 11 ist im linken Randbereich der an die Stirnseite 4 angrenzenden Seite der Speicherleuchtstoffplatte 10 angebracht. Die zweite Kontur 12 ist im rechten Randbereich der an die Stirnseite 4 angrenzenden Fläche der Speicherleuchtstoffplatte 10 angebracht. Die beiden Konturen 11 und 12 werden durch Aussparungen gebildet, in die ein Greifarm zum Herausziehen der Speicherleuchtstoffplatte 10 aus der Röntgenkassette 1 eingreifen kann. Dieser Greifarm ist Teil einer Vorrichtung zum Auslesen der in der Speicherleuchtstoffplatte 10 abgespeicherten Röntgeninformationen. Zum Auslesen dieser Röntgeninformationen wird die Röntgenkassette 1 in die Auslesevorrichtung eingesteckt. Die Greifarme fahren dann durch die geöffnete Öffnung 2 in die Röntgenkassette 1 ein und greifen die Speicherleuchtstoffplatte 10 an den beiden Konturen 11 und 12.

Neben den beiden Konturen 11 und 12 sind zwei Konturen 13 und 14 angeordnet, die zum Fixieren der Speicherleuchtstoffplatte 10 innerhalb der Röntgenkassette 1 dienen. Zum Fixieren der Speicherleuchtstoffplatte 10 in der Röntgenkassette 1 enthält diese eine erste Fixierwippe 21 und eine zweite Fixierwippe 22. Die beiden Wippen 21 und 22 sind an einem Steuerschieber 20 drehbar gelagert. An den beiden Wippen 21 und 22 angebrachte Fixierbolzen fahren zum Fixieren der Speicherleuchtstoffplatte 10 in die beiden Konturen 13 und 14 ein. Fixieren kann in diesem Zusammenhang sowohl ein schlichtes Zurückhalten der Speicherleuchtstoffplatte 10 bei geöffneter Röntgenkassette 1 oder aber auch ein sicheres Festklemmen der Speicherleuchtstoffplatte 10 innerhalb der Röntgenkassette 1 sein.

Der innerhalb der Röntgenkassette 1 angeordnete Steuerschieber 20 erstreckt sich im wesentlichen über die ganze Breite der Röntgenkassette 1. Der Steuerschieber 20 dient zum Öffnen und Schließen des Verschlusses 3 und zusätzlich zum Fixieren und Nichtfixieren der Speicherleuchtstoffplatte 10 in der Röntgenkassette 1. An seinem linken Ende weist der Steuerschieber 20 eine Kulisse 23 auf. Die Endseite dieser Kulisse 23 dient als Betätigungsmittel zum Betätigen des Steuerschiebers 20. Ein in der Vorrichtung zum Auslesen der Speicherplatte 10 vorgesehener Betätigungsstift 40 kann gegen die Endseite der Kulisse 23 gefahren werden, um den Steuerschieber in eine Richtung A, d. h. in Richtung der rechten Seitenfläche 5 der Röntgenkassette 1, zu verschieben. Um dieses Verschieben des Steuerschiebers 20 mittels des Betätigungsstiftes 40 zu ermöglichen, ist innerhalb der linken Seitenfläche 6 der Röntgenkassette 1 im Bereich der Endfläche der Kulisse 23 ein Betätigungsloch in der Seitenfläche 6 eingebracht. Über dieses Betätigungsloch kann der Betätigungsstift 40 in die Röntgenkassette 1 einfahren und gegen die Endfläche der Kulisse 23 drücken. Die durch den Betätigungsstift 40 aufgebrachte Kraft in Richtung A bewirkt das Verschieben des Steuerschiebers 20 in Richtung A.

An dem Steuerschieber 20 kann eine Rückstellfeder (nicht dargestellt) angebracht sein, die eine Kraft in eine Richtung B ausübt, die der Richtung A entgegengesetzt ist. Bei einem Verschieben des Betätigungsstiftes 40 in die Richtung B bewirkt die Rückstellfeder ein Verschieben des Steuerschiebers 20 in diese Richtung B. Bei dieser Ausführung der Röntgenkassette 1 kann mittels eines einzigen Betätigungsmittels ein Verschieben des Steuerschiebers 20 sowohl in Richtung A als auch in Richtung B bewirkt werden. Alternativ ist es möglich, in den beiden Seitenflächen 5 und 6 der Röntgenkassette 1 Betätigungslöcher zum Verschieben des Steuerschiebers 20 einzubringen. In der Fig. 1 ist ein Betätigungsloch 7 in der rechten Seitenfläche 5 dargestellt. Über dieses Betätigungsloch 7 kann ein in der Auslesevorrichtung angebrachter weiterer Betätigungsstift 40' eingeführt werden. Dieser weitere Betätigungsstift 40' kann den Steuerschieber 20 in Richtung B verschieben. Dazu drückt der weitere Betätigungsstift 40' durch das Betätigungsloch 7 gegen die Endfläche des rechten Endes des Steuerschiebers 20. Dadurch kann der Steuerschieber 20 in Richtung B verschoben werden. In diesem Fall enthält die Röntgenkassette 1 zwei Betätigungsmittel, die zum Verschieben des Steuerschiebers 20 und zum Einstellen der durch den Steuerschieber 20 einstellbaren Steuerstufen verwendet werden. Mittels der Endfläche des linken Endes des Steuerschiebers 20 und des Betätigungsstiftes 40 auf der linken Seite der Röntgenkassette 1 kann der Steuerschieber 20 in Richtung A verschoben werden.

Die Fig. 2 zeigt die zwei an dem linken Rand der Speicherleuchtstoffplatte 10 angebrachten Konturen 11 und 13. Die Kontur 11 dient zum Greifen der Speicherleuchtstoffplatte 10 durch einen Greifarm der Auslesevorrichtung. Die Kontur 11 wird hier mittels einer L-förmige Aussparung 15 gebildet, in die der Greifarm einfahren kann, um die Speicherleuchtstoffplatte 10 aus der Röntgenkassette 1 herauszuziehen. Rechts neben der Kontur 11 ist die Fixierkontur 13 angebracht. Die Kontur 13 wird mittels einer runden Öffnung 16 gebildet, in die ein an der Wippe 21 angebrachter Fixierbolzen einfahren kann, um die Speicherleuchtstoffplatte 10 in der Röntgenkassette 1 zu fixieren. Die beiden Konturen 11 und 13 können unabhängig von der Speicherleuchtstoffplatte ausgestaltet sein. Sowohl Form als auch Material der Konturen 11 und 13 können sich von Form und Material der Speicherleuchtstoffplatte unterscheiden. Die beiden Konturen 11 und 13 sind vorzugsweise aus gehärtetem Metall. Dieses ist besonders verschleißfest. Es ist aber auch möglich, die Konturen z. B. aus insbesondere faserverstärktem Kunststoff herzustellen.

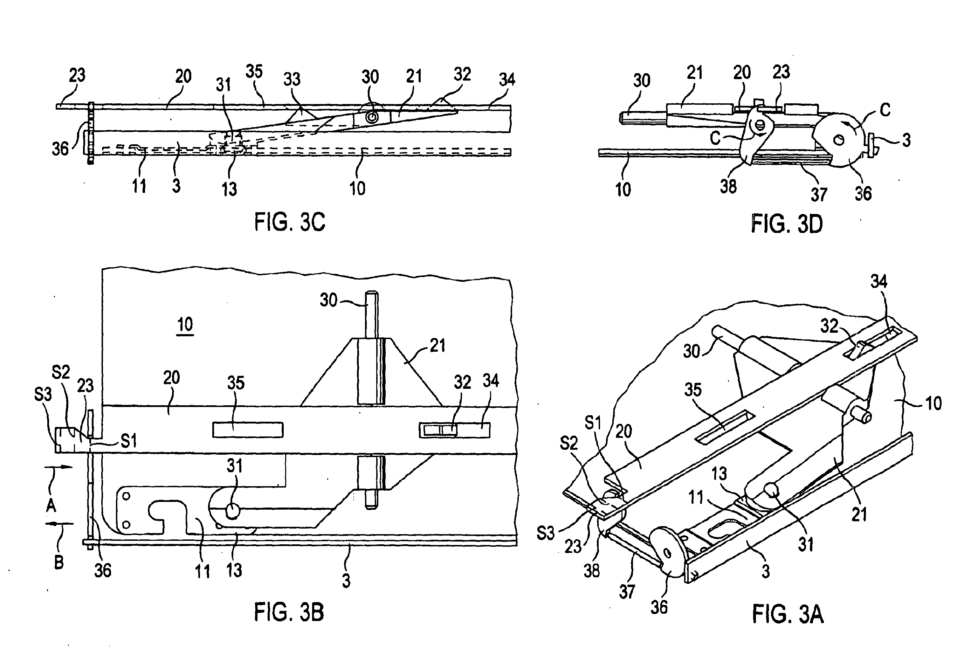

Die Fig. 3 A-D zeigen unterschiedliche Ansichten des Steuerschiebers 20 mit eingestellter erster Steuerstufe, bei der die Öffnung 2 der Röntgenkassette 1 durch den Verschluss 3 geschlossen ist und die Speicherleuchtstoffplatte 10 in der Röntgenkassette 1 fixiert ist.

Die Fig. 3 A zeigt einen Ausschnitt einer Ansicht des linken vorderen Bereichs der Röntgenkassette 1 mit dem linken Teil des Steuerschiebers 20 und der Wippe 21 zum Fixieren der Speicherleuchtstoffplatte 10 in der Röntgenkassette 1. Die Fixierwippe 21 ist über einen Drehbolzen 30 mit dem Steuerschieber 20 drehbar verbunden. Der Drehbolzen 30 stellt dabei die Drehachse für die Fixierwippe 21 dar. Die Wippe 21 weist eine Art Flügel auf, an dessen Ende ein Fixierbolzen 31 befestigt ist. Der Fixierbolzen 31 hat hier einen runden Querschnitt. Er ragt nach unten, d. h. in Richtung der Speicherleuchtstoffplatte 10, aus dem Flügel der Wippe 21 heraus. In der hier dargestellten ersten Steuerstufe des Steuerschiebers 20 ist der Fixierbolzen 31 in die Fixierkontur 13 eingefahren. Dadurch wird die Speicherleuchtstoffplatte 10 in der Röntgenkassette 1 fixiert.

Die Wippe 21 weist eine erste Wippennocke 32 und eine zweite Wippennocke 33 auf. Die beiden Wippennocken 32 und 33 sind dreieckförmig ausgestaltet und auf der oberen Oberfläche der Wippe 21 angebracht. Dabei ragen die Spitzen der dreieckförmigen Nocken 32 und 33 nach oben. Der Steuerschieber 20 enthält zwei schlitzförmige Aussparungen 34 und 35. Der erste Schlitz 34 ist in einem Bereich oberhalb der im rechten Teil der Wippe 21 angebrachten Nocke 32 und der zweite Schlitz 35 in einem Bereich oberhalb der im linken Teil der Wippe 21 angebrachten zweiten Nocke 33 angebracht. Die beiden Schlitze 34 und 35 haben jeweils solche Breite, dass die Nocken 32 bzw. 33 in die beiden Schlitze 34 bzw. 35 eingreifen können. Die Fig. 3 A zeigt, wie die Nocke 32 in den Schlitz 34 eingreift und durch den Schlitz 34 des Steuerschiebers 20 nach oben herausragt. Der zur Seitenfläche 6 der Röntgenkassette 1 hin ragende, links von der Drehachse 30 angeordnete Teil der Wippe 21 ist in der ersten Steuerstufe nach unten, hin zur Speicherleuchtstoffplatte 10 gerichtet. Der rechts des Drehbolzens befindliche Teil der Wippe 21 ist nach oben, d. h. von der Speicherleuchtstoffplatte 10 weg, gerichtet.

Am linken Ende des Steuerschiebers 20 befindet sich die Kulisse 23. Die Kulisse 23 weist in ihrem Endbereich eine große Breite auf. Daran schließt sich ein Bereich an, in dem sich die Kulisse auf eine kleine Breite hin verjüngt. In diesem sich verjüngenden Bereich der Kulisse 23 weist die Kulisse 23 eine Schräge auf. Die Kulisse 23 wird dadurch von dem breiten Bereich linear in den Bereich mit kleiner Breite überführt.

In dem Ausführungsbeispiel gemäß der Fig. 3 A-D befindet sich der Steuerschieber in der ersten Steuerstufe. Dies bedeutet, dass die Öffnung der Röntgenkassette mittels des Verschlusses 3 geschlossen ist. Zum Bewegen des Verschlusses 3 enthält die Röntgenkassette 1 eine Mimik, mit der der Verschluss 3 in vertikaler Richtung nach oben verschoben werden kann. Die Mimik zum Öffnen und Schließen des Verschlusses 3 enthält einen Bewegungsumsetzer 38, der an der Seitenfläche 6 der Röntgenkassette 1 drehbar gelagert ist. In dem oberen Bereich des Bewegungsumsetzers 38 ist dieser hakenförmig ausgestaltet. Der Haken des Bewegungsumsetzers 38 greift an der Seitenfläche der Kulisse 23 ein. Im Bereich des unteren rechten Endes des Bewegungsumsetzers 38 ist eine linear geführte Druckstange 37 angebracht. Beim Drehen des Bewegungsumsetzers 38 stößt dieser gegen die Druckstange 37. Diese nimmt die Drehbewegung auf und wandelt sie in eine Linearbewegung in Richtung eines Mitnehmers 36. Der Mitnehmer 36 befindet sich rechts neben der Druckstange 37 und ist an der Seitenfläche 6 der Röntgenkassette 1 drehbar gelagert. Die Linearbewegung der Druckstange 37 führt dazu, dass diese gegen den Mitnehmer 36 drückt. Dieser beginnt dann, sich zu drehen. Die Linearbewegung der Druckstange 37 wird somit durch den Mitnehmer 36 in eine Drehbewegung umgesetzt. Der Mitnehmer 36 greift am linken Ende des Verschlusses 3 in diesen ein, so dass sich der Verschluss 3 in vertikaler Richtung nach oben bewegt.

In den Ausführungsbeispielen der Fig. 3 A-D greift der Bewegungsumsetzer an dem Bereich der Kulisse 23 mit der kleinen Breite ein. Die Position des Hakens relativ zur Kulisse 23 ist in den Fig. 3 A und 3 B durch die Positionsangabe S1 der Kulisse 23 dargestellt. Die Position S1 kennzeichnet das Einstellen der ersten Steuerstufe des Steuerschiebers 20. Die Position S1 wird somit durch das Eingreifen des Hakens des Bewegungsumsetzers 38 an dem Bereich der Kulisse 23 mit der kleinen Breite eingestellt. In der Position S1 befindet sich der Verschluss 3 in der unteren Position, so dass die Öffnung 2 verschlossen ist, und der Flügel der Wippe 21 ist nach unten gerichtet, so dass der am Ende des Flügels angebrachte Fixierbolzen 31 in die Fixierkontur 13 eingreift.

Die Fig. 3 B zeigt eine Draufsicht auf die in der Fig. 3 A dargestellte Anordnung. In der Fig. 3 B ist die Ausgestaltung der Kulisse 23 und das Einstellen der Position S1 gut sichtbar dargestellt.

Die Fig. 3 C zeigt eine Vorderansicht auf die Anordnung nach Fig. 3 A. In der Fig. 3 C ist die Ausrichtung der Wippe 21 gut dargestellt. Es ist zu erkennen, wie der Fixierbolzen 31 in die Fixierkontur 13 eingreift. Die links des Drehbolzens 30 angeordnete Wippennocke 33 befindet sich hier unterhalb des Steuerschiebers 20 und releativ zu der schlitzförmigen Aussparung 35 seitlich nach rechts versetzt. Die Wippennocke 32 auf der rechts von der Drehachse 30 angeordneten Oberfläche der Wippe 21 ragt hingegen durch die schlitzförmige Aussparung 34 des Steuerschiebers 20 hindurch.

Die Fig. 3 D zeigt eine Seitenansicht der Anordnung nach Fig. 3 A. In der Darstellung gemäß der Fig. 3 D ist die Mimik mit dem Mitnehmer 36, der Stange 37 und dem Bewegungsumsetzer 38 zum vertikalen Verschieben des Verschlusses 3 dargestellt. Ein Verdrehen des Bewegungsumsetzers 38 und des Mitnehmers 36 in eine Drehrichtung C bewirkt ein Hochfahren des Verschlusses 3. Das Drehen in Drehrichtung C wird durch ein Verschieben des Steuerschiebers 20 in Richtung A bewirkt. Von dem Bereich geringer Breite der Kulisse 23 wird der Haken des Bewegungsumsetzers 38 entlang der Schräge des sich verjüngenden Bereichs der Kulisse 23 verschoben, bis der Haken in dem Bereich der Kulisse 23 mit großer Breite angekommen ist. Diese Position des Hakens relativ zur Kulisse 23 ist durch die Positionsangebe S2 in den Figuren 3 A und 3 B dargestellt. Die dadurch bewirkte Drehbewegung des Bewegungsumsetzers 38 in Richtung C wird über die Stange 37 auf den Mitnehmer 36 übertragen. Dieser bewegt sich somit ebenfalls in Drehrichtung C und entgegen einer von einer (nicht dargestellten) Rückstellfeder in die entgegengesetzte Drehrichtung ausgeübten Kraft.

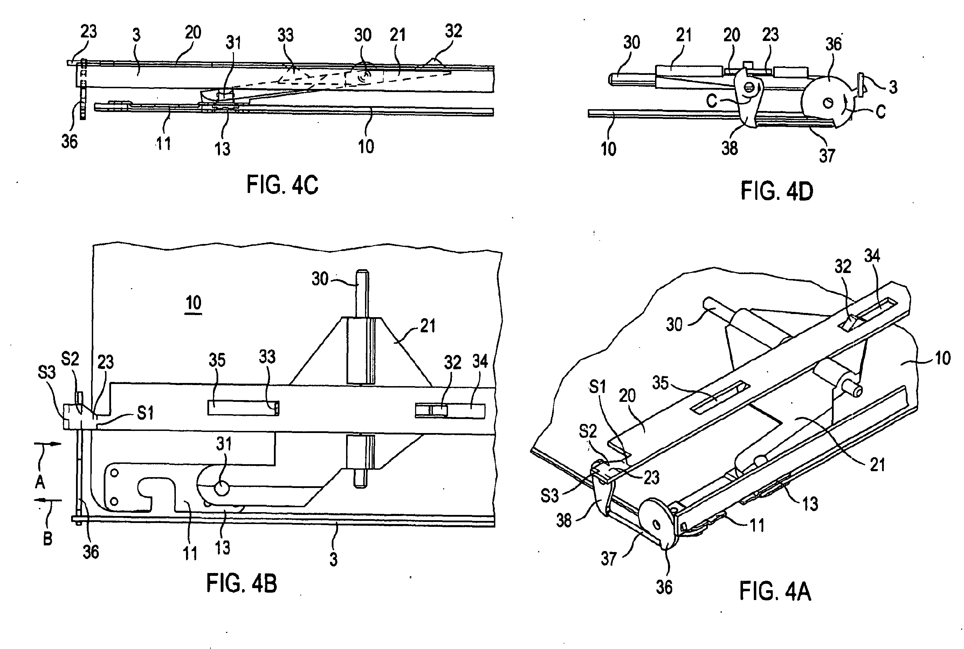

Die Fig. 4 A-D zeigen vier unterschiedliche Ansichten des Ausführungsbeispiels des Steuerschiebers 20 mit eingestellter zweiter Steuerstufe. In dieser zweiten Steuerstufe ist die Öffnung 2 der Röntgenkassette 1 mittels des Verschlusses 3 geöffnet. Die Speicherleuchtstoffplatte 10 ist allerdings weiterhin in der Röntgenkassette 1 fixiert.

Die Fig. 4 A zeigt, wie bereits die Fig. 3 A eine Ansicht des linken vorderen Bereichs der Röntgenkassette 1 mit dem linken Teil des Steuerschiebers 20 und der Fixierwippe 21. Die Fig. 4 B zeigt die Draufsicht auf die in der Fig. 4 A dargestellte Anordnung. Die Fig. 4 C zeigt die Vorderansicht auf die in der Fig. 4 A dargestellte Anordnung. Die Fig. 4 D zeigt die Seitenansicht auf die Anordnung nach Fig. 4 A.

In den Darstellungen nach den Fig. 4 A bis 4 D befindet sich der Steuerschieber 20, und damit die an seinem linken Ende angebrachte Kulisse 23, in der Position S2. Dies bedeutet, dass der Haken des Bewegungsumsetzers 38 entlang der Schräge des sich verjüngenden Bereichs der Kulisse 23 in den Bereich großer Breite der Kulisse 23 verschoben wurde. Über die dadurch erzeugte Drehbewegung des Bewegungsumsetzers 38 und des Mitnehmers 36 wurde der Verschluss 3 in vertikaler Richtung nach oben bewegt. Dies ist insbesondere in der Fig. 4 D gut sichtbar. Der Steuerschieber 20 wurde somit ein Stück in Richtung A verschoben. Dies ist auch an den Positionen der beiden schlitzförmigen Aussparungen 34 und 35 des Steuerschiebers 20 erkennbar. Die relative Position der beiden Schlitze 34 und 35 zu den beiden Wippennocken 32 und 33 ist hier gegenüber den Darstellungen in den Fig. 3 A bis 3 D verschoben. Allerdings ragt die Wippennocke 32 weiterhin durch den Schlitz 34 hindurch, während die Wippennocke 33 weiterhin unterhalb des Steuerschiebers 20 und etwas seitlich versetzt zu dem Schlitz 35 positioniert ist. Der Flügel der Wippe 21 ist daher weiterhin in Richtung der Speicherleuchtstoffplatte 10 geneigt, so dass der am Ende des Flügels angebrachte Fixierbolzen 31 weiterhin in die Öffnung 16 der Fixierkontur 13 eingreift und die Speicherleuchtstoffplatte 10 in der Röntgenkassette 1 fixiert. Dies ist insbesondere gut sichtbar in der Fig. 4 C dargestellt.

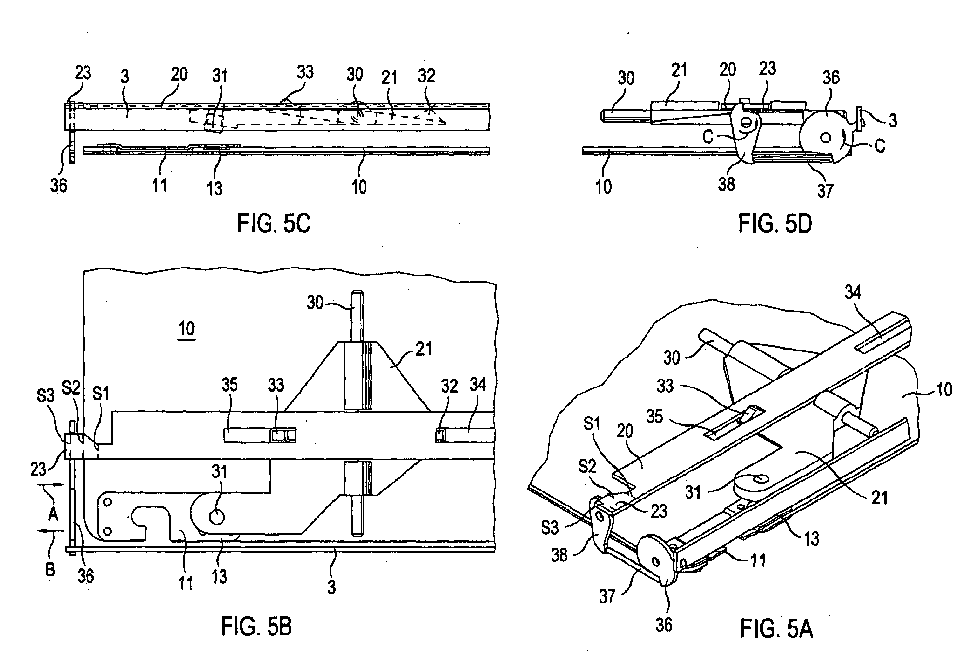

Die Fig. 5 A-D zeigen unterschiedliche Ansichten des Ausführungsbeispiels des Steuerschiebers 20 mit eingestellter dritter Steuerstufe. In dieser dritten Steuerstufe ist die Öffnung 2 der Röntgenkassette 1 mittels des Verschlusses 3 geöffnet. Die Speicherleuchtstoffplatte 10 ist nicht mehr in der Röntgenkassette 1 fixiert. Der Steuerschieber 20 und die an seinem linken Ende angebrachte Kulisse 23 wurden ein weiteres Stück in Richtung A verschoben. Der Steuerschieber 20 und die Kulisse 23 befinden sich in den Fig. 5 A bis 5 D in einer Position S3. Diese Position S3 ist in den Fig. 5 A und 5 B als Position des Hakens des Bewegungsumsetzers 38 in Relation zu der Kulisse 23 dargestellt. Der Bewegungsumsetzer 38 befindet sich weiterhin im Bereich der Kulisse 23 mit großer Breite. Dies bewirkt, dass sich der Verschluss 3 weiterhin in der oberen Position befindet. Dies ist insbesondere in der Fig. 5 D gut sichtbar dargestellt. Die Breite der Kulisse 23 an der Position S2 ist identisch mit der Breite der Kulisse an der Position S3.

Allerdings wurde auf Grund des weiteren Verschiebens des Steuerschiebers 20 in Richtung A auch die Positionen der beiden schlitzförmigen Aussparungen 34 und 35 des Steuerschiebers 20 gegenüber den beiden Wippennocken 32 und 33 verändert. Die erste Wippennocke 32 auf der rechten Seite der Wippe 21 befindet sich nun unterhalb des Steuerschiebers 20. Die Nocke 32 ragt insofern nicht durch die schlitzförmige Aussparung 34 hindurch. Dies ist nun bei der Wippennocke 33 der Fall. Diese ragt nämlich durch die schlitzförmige Aussparung 35 hindurch. Dadurch wurde der Flügel der Wippe 21 in vertikaler Richtung nach oben gefahren. Der am Ende des Flügels angebrachte Fixierbolzen 31 befindet sich nicht mehr in der Fixierkontur 13. Der Fixierbolzen 31 kann daher die Speicherleuchtstoffplatte 10 nicht mehr in der Röntgenkassette 1 fixieren. Das Aufheben dieses Fixierzustandes ist insbesondere in der Fig. 5 C gut sichtbar dargestellt.

Die an Hand der Figuren beschriebenen Ausführungsbeispiele zeigen, wie es auf Grund des dreistufigen Steuerschiebers 20 möglich ist, auf einfache Weise die drei Steuerstufen einzustellen. Ein einfaches Verschieben des Steuerschiebers 20 bewirkt ein Öffnen und Schließen des Verschlusses 3 und ein Fixieren und Nichtfixieren der Speicherleuchtstoffplatte 10 in der Röntgenkassette 1. Auf Grund des dreistufigen Steuerschiebers 20 kann insbesondere gewährleistet werden, dass die Röntgenkassette 1 in einer Vorrichtung zum Auslesen der Speicherleuchtstoffplatte 10 geöffnet werden kann und gleichzeitig die Speicherleuchtstoffplatte 10 weiterhin in der Röntgenkassette 1 fixiert und zurückgehalten wird. Ein in der Vorrichtung zum Auslesen der Speicherleuchtstoffplatte 10 vorgesehener Greifarm zum Greifen der Speicherleuchtstoffplatte 10 kann insofern zunächst die Speicherleuchtstoffplatte 10 an den Konturen 11 und 12 festgreifen, bevor die Fixierung der Speicherleuchtstoffplatte 10 aufgehoben wird. Ein Verlieren der Speicherleuchtstoffplatte 10 beim Transportieren innerhalb der Vorrichtung zum Auslesen kann somit vorteilhafterweise vermieden werden.

## Patentansprüche

1. Kassette (1) zur Aufnahme einer Speicherleuchtstoffplatte (10) zum Abspeichern von Bildinformationen, wobei die Kassette (1)
einen Verschluss (3) zum Öffnen und Schließen einer Öffnung (2) der Kassette (1),
ein Fixiermittel (21, 22, 31) zum Fixieren der Speicherleuchtstoffplatte (10) in der Kassette (1), und
ein Steuermittel (20) zum Betätigen des Verschlusses (3) und des Fixiermittels (21, 22, 31) aufweist, wobei mittels des Steuermittels (20) mehrere Steuerstufen (S1, S2, S3) einstellbar sind, wobei
in einer ersten Steuerstufe (S1) die Öffnung (2) mittels des Verschlusses (3) geschlossen ist und das Fixiermittel (21, 22, 31) so eingestellt ist, dass die Speicherleuchtstoffplatte (10) in der Kassette (1) fixiert ist, und
in einer dritten Steuerstufe (S3) die Öffnung (2) geöffnet ist und das Fixiermittel (21, 22, 31) so eingestellt ist, dass das Fixieren der Speicherleuchtstoffplatte (10) in der Kassette (1) aufgehoben ist, **dadurch gekennzeichnet, dass**
in einer zweiten Steuerstufe (S2) die Öffnung (2) geöffnet ist und das Fixiermittel (21, 22, 31) so eingestellt ist, dass die Speicherleuchtstoffplatte (10) in der Kassette (1) fixiert ist.

2. Kassette nach Anspruch 1, wobei das Steuermittel (20) so ausgestaltet ist, dass die wenigstens drei Steuerstufen (S1, S2, S3) nacheinander in aufsteigender Reihenfolge (S1, S2, S3), d. h. zunächst die erste (S1), dann die zweite (S2) und anschließend die dritte (S3) Steuerstufe, oder in absteigender Reihenfolge (S3, S2, S1), d. h. zunächst die dritte (S3), dann die zweite (S2) und anschließend die erste (S1) Steuerstufe, einstellbar sind.

3. Kassette nach Anspruch 1 oder Anspruch 2, wobei die Kassette ein Betätigungsmittel (7, 23) zum Betätigen des Steuermittels (20) aufweist.

4. Kassette nach Anspruch 3, wobei das Betätigungsmittel (7, 23) zu einer Seitenfläche (5, 6) der Kassette (1) hin angeordnet ist.

5. Kassette nach einem der vorhergehenden Ansprüche, wobei die Kassette sie zwei Betätigungsmittel (7, 23) zum Betätigen des Steuermittels (20) aufweist.

6. Kassette nach Anspruch 5, wobei das erste Betätigungsmittel (23) zu einer ersten Seitenfläche (6) und das zweite Betätigungsmittel (7) zu einer zweiten Seitenfläche (5) der Kassette (1) hin angeordnet ist und die erste Seitenfläche (6) und die zweite Seitenfläche (5) gegenüberliegende Seitenflächen sind.

7. Kassette nach Anspruch 5 oder Anspruch 6, wobei mittels des ersten Betätigungsmittels (23) die Öffnung (2) mittels des Verschlusses (3) geöffnet und das Fixiermittel (21, 22, 31) so eingestellt ist, dass das Fixieren der Speicherleuchtstoffplatte (10) in der Kassette (1) aufgehoben ist, und mittels des zweiten Betätigungsmittels die Öffnung (2) mittels des Verschlusses (3) geschlossen und das Fixiermittel (21, 22, 31) so eingestellt wird, dass es die Speicherleuchtstoffplatte (10) in der Kassette (1) fixiert.

8. Kassette nach einem der vorhergehenden Ansprüche, wobei das Steuermittel einen Steuerschieber (20) aufweist, der so ausgestaltet ist, dass die Steuerstufen (S1, S2, S3) des Steuermittels durch Verschieben des Steuerschiebers (20) nacheinander einstellbar sind.

9. Verfahren zum Öffnen und Schließen einer Öffnung (2) einer Kassette (1) zur Aufnahme einer Speicherleuchtstoffplatte (10), die zum Abspeichern von Bildinformationen dient, wobei mittels eines Steuermittels (20) ein Verschluss (3) und ein Fixiermittel (21, 22, 31) zum Fixieren der Speicherleuchtstoffplatte (10) in der Kassette (1) angesteuert werden, und das Steuermittel (20) wenigstens drei Steuerstufen (S1, S2, S3) einstellt, so dass in einer ersten Steuerstufe (S1) die Öffnung (2) mittels des Verschlusses (3) geschlossen und die Speicherleuchtstoffplatte (10) in der Kassette (1) fixiert wird,
in einer zweiten Steuerstufe (S2) die Öffnung (2) geöffnet wird und die Speicherleuchtstoffplatte (10) in der Kassette (1) fixiert bleibt, und
in einer dritten Steuerstufe (S3) die Öffnung (2) geöffnet bleibt und das Fixieren der Speicherleuchtstoffplatte (10) in der Kassette (1) aufgehoben wird.

## Claims

1. Cassette (1) for receiving a storage fluorescent material screen (10) for storing image information, the cassette (1) comprising a closure (3) for opening and closing an opening (2) of the cassette (1), a fixing means (21, 22, 31) for fixing the storage fluorescent material screen (10) in the cassette (1) and a control means (20) for actuating the closure (3) and the fixing means (21, 22, 31), wherein a plurality of control stages (S1, S2, S3) may be set by means of the control means (20), wherein, in a first control stage (S1), the opening (2) is closed by means of the closure (3) and the fixing means (21, 22, 31) is set such that the storage fluorescent material screen (10) is fixed in the cassette (1) and in a third control stage (S3) the opening (2) is opened and the fixing means (21, 22, 31) is set such that fixing of the storage fluorescent material screen (10) in the cassette (1) is cancelled, **characterised in that** in a second control stage (S2) the opening (2) is opened and the fixing means (21, 22, 31) is set such that the storage fluorescent material screen (10) is fixed in the cassette (1).

2. Cassette according to claim 1, wherein the control means (2) is configured in such a way that the at least three control stages (S1, S2, S3) can be set one after the other in ascending sequence (S1, S2, S3), *i.e.* firstly the first (S1), then the second (S2), and subsequently the third (S3) control stage, or in descending sequence (S3, S2, S1), *i.e.* firstly the third (S3), then the second (S2) and subsequently the first (S1) control stage.

3. Cassette according to either claim 1 or claim 2, wherein the cassette comprises an actuating means (7, 23) for actuating the control means (20).

4. Cassette according to claim 3, wherein the actuating means (7, 23) is arranged toward a lateral face (5, 6) of the cassette (1).

5. Cassette according to any one of the preceding claims, wherein the cassette comprises two actuating means (7, 23) for actuating the control means (20).

6. Cassette according to claim 5, wherein the first actuating means (23) is arranged toward a first lateral face (6) and the second actuating means (7) is arranged toward a second lateral face (5) of the cassette (1) and the first lateral face (6) and the second lateral face (5) are opposing lateral faces.

7. Cassette according to claim 5 or claim 6, wherein, by means of the first actuating means (23), the opening (2) is opened by means of the closure (3) and the fixing means (21, 22, 31) set such that fixing of the storage fluorescent material screen (10) in the cassette (1) is cancelled, and, by means of the second actuating means, the opening (2) is closed by means of the closure (3) and the fixing means (21, 22, 31) set such that it fixes the storage fluorescent material screen (10) in the cassette (1).

8. Cassette according to any one of the preceding claims, wherein the control means comprises a control slide valve (20) which is configured in such a way that the control stages (S1, S2, S3) of the control means can be set one after the other by displacing the control slide valve (20).

9. Method for opening and closing an opening (2) of a cassette (1) for receiving a storage fluorescent material screen (10) which is used to store image information, wherein a closure (3) and a fixing means (21, 22, 31) for fixing the storage fluorescent material screen (10) in the cassette (1) are controlled by means of a control means (20) and the control means (20) sets at least three control stages (S1, S2, S3), so in a first control stage (S1) the opening (2) is closed by means of the closure (3) and the storage fluorescent material screen (10) is fixed in the cassette (1), in a second control stage (S2) the opening (2) is opened and the storage fluorescent material screen (10) remains fixed in the cassette (1), and in a third control stage (S3) the opening (2) remains open and fixing of the storage fluorescent material screen (10) in the cassette (1) is cancelled.

## Revendications

1. Cassette (1) conçue pour recevoir une plaquette luminescente accumulatrice (10) en vue du stockage d'informations d'images, ladite cassette (1) comprenant
une obturation (3) pour ouvrir et fermer un orifice (2) de ladite cassette (1),
un moyen de verrouillage (21, 22, 31) pour verrouiller la plaquette luminescente accumulatrice (10) dans ladite cassette (1), et
un moyen de commande (20) pour actionner l'obturation (3) et le moyen de verrouillage (21, 22, 31),
ledit moyen de commande (20) permettant de régler plusieurs degrés de commande (S1, S2, S3), sachant que,
à un premier degré de commande (S1), l'orifice (2) est fermé au moyen de l'obturation (3), et le moyen de verrouillage (21, 22, 31) est réglé de telle sorte que la plaquette luminescente accumulatrice (10) soit verrouillée dans la cassette (1), et que,
à un troisième degré de commande (S3), ledit orifice (2) est ouvert et ledit moyen de verrouillage (21, 22, 31) est réglé de telle sorte que le verrouillage de ladite plaquette luminescente accumulatrice (10) dans la cassette (1) soit supprimé, **caractérisée par le fait que**,
à un deuxième degré de commande (S2), ledit orifice (2) est ouvert et ledit moyen de verrouillage (21, 22, 31) est réglé de telle sorte que la plaquette luminescente accumulatrice (10) soit verrouillée dans ladite cassette (1).

2. Cassette selon la revendication 1, dans laquelle le moyen de commande (20) est conçu de telle sorte que les trois degrés de commande (S1, S2, S3), prévus au minimum, puissent être successivement réglés dans un ordre séquentiel croissant (S1, S2, S3), c'est-à-dire tout d'abord le premier degré (S1), puis le deuxième degré (S2), et ensuite le troisième degré (S3) ; ou bien dans un ordre séquentiel décroissant (S3, S2, S1), c'est-à-dire tout d'abord le troisième degré (S3), puis le deuxième degré (S2), et ensuite le premier degré (S1).

3. Cassette selon la revendication 1 ou la revendication 2, ladite cassette présentant un moyen d'actionnement (7, 23) pour actionner le moyen de commande (20).

4. Cassette selon la revendication 3, dans laquelle le moyen d'actionnement (7, 23) est agencé en direction d'une face latérale (5, 6) de ladite cassette (1).

5. Cassette selon l'une des revendications précédentes, ladite cassette comprenant deux moyens d'actionnement (7, 23) pour actionner le moyen de commande (20).

6. Cassette selon la revendication 5, dans laquelle le premier moyen d'actionnement (23) et le second moyen d'actionnement (7) sont respectivement agencés en direction d'une première face latérale (6) et d'une seconde face latérale (5) de ladite cassette (1), la première face latérale (6) et la deuxième face latérale (5) étant des faces latérales tournées à l'opposé l'une de l'autre.

7. Cassette selon la revendication 5 ou la revendication 6, dans laquelle, à l'aide du premier moyen d'actionnement (23), l'orifice (2) est ouvert au moyen de l'obturation (3), et le moyen de verrouillage (21, 22, 31) est réglé de telle sorte que le verrouillage de la plaquette luminescente accumulatrice (10) dans ladite cassette (1) soit supprimé ; et, à l'aide du second moyen d'actionnement, ledit orifice (2) est fermé au moyen de l'obturation (3), et ledit moyen de verrouillage (21, 22, 31) est réglé de telle sorte qu'il verrouille ladite plaquette luminescente accumulatrice (10) dans ladite cassette (1).

8. Cassette selon l'une des revendications précédentes, dans laquelle le moyen de commande présente une coulisse de commande (20) conçue de telle sorte que les degrés de commande (S1, S2, S3) dudit moyen de commande soient réglés, en succession, par coulissement de ladite coulisse de commande (20).

9. Procédé d'ouverture et de fermeture d'un orifice (2) d'une cassette (1) conçue pour recevoir une plaquette luminescente accumulatrice (10) servant à stocker des informations d'images, procédé dans lequel un moyen de commande (20) permet d'activer une obturation (3) et un moyen de verrouillage (21, 22, 31) destiné à verrouiller ladite plaquette luminescente accumulatrice (10) dans ladite cassette (1), et ledit moyen de commande (20) règle au moins trois degrés de commande (S1, S2, S3) de telle sorte que,
à un premier degré de commande (S1), l'orifice (2) soit fermé au moyen de l'obturation (3) et la plaquette luminescente accumulatrice (10) soit verrouillée dans la cassette (1),
à un deuxième degré de commande (S2), ledit orifice (2) soit ouvert et ladite plaquette luminescente accumulatrice (10) demeure verrouillée dans ladite cassette (1), et,
à un troisième degré de commande (S3), ledit orifice (2) demeure ouvert et le verrouillage de ladite plaquette luminescente accumulatrice (10), dans ladite cassette (1), soit supprimé.
